Europäisches Patentamt

(19) European Patent Office

Office européen des brevets

(11) Numéro de publication: **0 015 169**
**B1**

(12) **FASCICULE DE BREVET EUROPEEN**

(45) Date de publication du fascicule du brevet: **24.03.82**

(51) Int. Cl.³: **F 16 H 39/44** //B60K17/10

(21) Numéro de dépôt: **80400065.1**

(22) Date de dépôt: **15.01.80**

(54) **Circuit d'assistance motrice comprenant au moins un moteur à fluide.**

(30) Priorité: **29.01.79 FR 7902225**

(43) Date de publication de la demande:
**03.09.80 Bulletin 80/18**

(45) Mention de la délivrance du brevet:
**24.03.82 Bulletin 82/12**

(84) Etats contractants désignés:
**DE GB IT SE**

(56) Documents cités:
DE - A - 2 326 075
FR - A - 1 281 897
FR - A - 1 404 537
FR - A - 2 186 610
US - A - 3 690 099

(73) Titulaire: **POCLAIN HYDRAULICS Société
Anonyme de droit français
Boîte Postale no 12
F-60410 Verberie (FR)**

(72) Inventeur: **Bacquié, Serge Baptiste
8, rue de Picardie
F-60610 La Croix Saint-Ouen (FR)**
Inventeur: **Rouillard, Jean-Marie René
12, rue du Saut du Cerf
F-60610 La Croix Saint-Ouen (FR)**

(74) Mandataire: **Hoisnard, Jean-Claude et al,
Cabinet Beau de Lomenie 55, rue d'Amsterdam
F-75008 Paris (FR)**

Courier Press, Leamington Spa, England.

Circuit d'assitance motrice comprenant au moins un moteur à fluide

On connaît déjà des véhicules qui, propulsés normalement par un moteur thermique, sont munis de dispositifs d'assistance motrice pour aider leur déplacement lorsque les conditions de ce déplacement deviennent difficiles. C'est ainsi, notamment, que des engins de chantier constitués par un tracteur routier et par une remorque de grande capacité, ont les roues de leur remorque munies de moteurs hydrauliques d'entraînement qui ont pour but de rendre ces roues motrices uniquement lorsque l'engin correspondant se trouve sur le terrain défoncé d'un chantier.

La commande de tels moteurs hydrauliques d'assistance doit être souple, continue, et doit permettre aussi bien de rendre la remorque partiellement motrice, que de combattre la tendance de cette remorque à se placer devant, ou en travers du tracteur, lorsque l'engin descend une côte en charge.

L'invention a pour but de proposer un dispositif complet d'assistance, permettant de réaliser aussi bien l'assistance que la retenue en descente, et qui présente d'autres avantages qui seront mis en évidence ultérieurement.

Il doit, par ailleurs, être noté que si le problème initialement posé, qui a conduit à la définition de la présente invention, était celui des remorques tractées susceptibles de se déplacer sur de mauvais terrains, le domaine d'application de l'invention n'est pas limité à la résolution dudit problème, mais couvre au contraire toutes les applications où les caractéristiques de l'invention, d'assistance et de retenue, et autres, sont recherchées.

L'art connu, antérieur à l'invention, est notamment constitué par les brevets français N° 1 281 897 et 1 404 537, et, par le brevet des Etats-Unis d'Amérique N° 3 690 099.

Selon le brevet français N° 1 281 897, une pompe est utilisée pour alimenter un moteur hydraulique en fluide sous pression. Un clapet de décharge taré, à tarage réglable, est raccordé en dérivation au conduit d'alimentation du moteur. Ce circuit hydraulique évoque la constitution de la partie, admise comme étant déjà connue, du dispositif d'assistance motrice revendiqué dans la présente demande, mais ne révèle pas la combinaison de clapets d'assistance et de retenue, ni celle des commandes de réglage de leur tarage, conformes aux dispositions revendiquées.

Ainsi, la totalité des moyens indispensables à l'obtention d'un fonctionnement satisfaisant en toutes circonstances, et notamment pendant les périodes d'assistance et pendant celles de retenue, n'est proposée pour la première fois que par les présentes revendications.

Le brevet français N° 1 404 537 définit des dispositions moins proches de celles présentement revendiquées que celles du brevet N° 1 281 897. Cependant, les commentaires relatifs à la nouveauté de l'invention revendiquée par rapport au brevet N° 1 281 897 conviennent également pour le brevet N° 1 404 537.

Le brevet des Etats-Unis d'Amérique N° 3 690 099 décrit une disposition encore plus éloignée de l'invention revendiquée que celles des deux brevets français précités. En effet, on ne retrouve dans cette disposition du brevet N° 3 690 099 aucun dispositif de réglage volontaire du tarage des clapets de décharge, et, a fortiori, aucun dispositif de synchronisation des commandes de tels réglages de tarage.

L'invention est donc relative à un dispositif d'assistance motrice comprenant au moins :
— un moteur d'assistance à fluide,
— une source de fluide sous pression,
— un conduit d'alimentation du moteur reliant le raccord de refoulement de la source de fluide au raccord d'admission du moteur, et,
— un clapet de décharge taré, dit, clapet d'assistance, qui est raccordé en dérivation au conduit d'alimentation et qui est muni d'un dispositif de réglage de son tarage dont la commande est volontaire.

Ce dispositif d'assistance comprend un conduit d'échappement du moteur, sur lequel est disposé un autre clapet de décharge taré, dit, clapet de retenue, qui est muni d'un dispositif de réglage de son tarage, dont la commande est également volontaire, les commandes de réglage de tarage des deuxdits clapets d'assistance et de retenue étant synchronisés au moyen d'un manipulateur unique à deux plages distinctes de fonctionnement séparées par une plage neutre, l'une des plages de fonctionnement correspondant à des pressions de tarage sensiblement nulles de l'un des clapets, non nulles de l'autre clapet, l'autre plage de fonctionnement correspondant à des pressions de tarage sensiblement nulles dudit autre clapet et non nulles du clapet complémentaire, et, la plage neutre correspondant à une pression de tarage sensiblement nulle de chaque clapet.

Les avantageuses dispositions suivantes sont, en outre, de préférence, adoptées:
— un distributeur de fluide à au moins deux positions est interposé sur les conduits d'alimentation et d'échappement assurant dans une première position la continuité de chacun de ces deux conduits, et, dans une deuxième position, mettant les parties de ces deux conduits comprises entre lui-même et le moteur en communication entre elles et avec un réservoir de fluide sans pression;
— ce distributeur de fluide à au moins deux positions obture, dans ladite deuxième position, le conduit d'alimentation, cependant qu'un conduit de dérivation relie la partie de ce conduit d'alimentation comprise entre la source de fluide et le distributeur à un circuit d'utilisation ;

— sur le conduit d'échappement, en aval du clapet de retenue par rapport au moteur, est disposé un troisième clapet de décharge, taré à une faible pression, dit clapet de gavage, cependant qu'un conduit de gavage relie les conduits d'alimentation et d'échappement en étant raccordé à ce dernier entre le clapet de retenue et le clapet de gavage et qu'un clapet de nonretour est disposé sur ce conduit de gavage et permet le passage du fluide uniquement du conduit d'échappement vers le conduit d'alimentation.

L'invention sera mieux comprise, et des caractéristiques secondaires et leurs avantages apparaîtront au cours de la description d'une réalisation donnée ci-dessous à titre d'exemple.

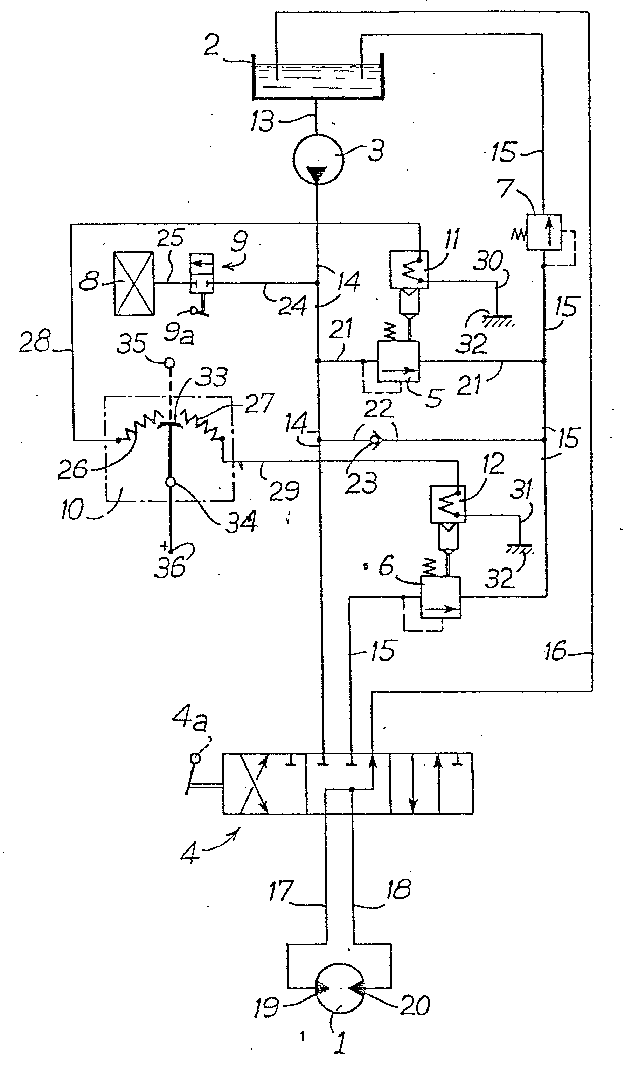

Il est entendu que la description et le dessin ne sont donnés qu'à titre indicatif et non limitatif.

Il sera fait référence au dessin annexé, dans lequel la figure unique représente le schéma d'un dispositif d'assistance conforme à l'invention.

Le dispositif décrit est celui du moteur hydraulique 1, dont est munie l'une des roues d'une remorque de chantier, qui, par ailleurs, est attelée à un tracteur automobile classique. Naturellement, cette remorque ne comporte pas qu'une seule roue, mais plus généralement en comporte deux groupes de deux roues de chaque côté, soit au total quatre groupes de deux roues. Chacun de ces groupes de deux roues peut être attelé à un moteur hydraulique, analogue au moteur 1.

Le dispositif représenté comporte:
— un réservoir de fluide hydraulique 2,
— une pompe hydraulique 3,
— un distributeur à trois positions 4,
— un premier clapet de décharge taré 5, dit, clapet d'assistance,
— un deuxième clapet de décharge taré 6, dit, clapet de retenue,
— un troisième clapet de décharge taré 7, dit, clapet de gavage,
— un circuit d'utilisation 8, tel qu'un vérin de benne basculante, distinct du moteur 1,
— un distributeur à deux positions 9,
— un manipulateur électrique 10, et
— des organes 11 et 12 (électro-aimants) de réglage de la pression de tarage des clapets d'assistance 5 et de retenue 6, respectivement.

Tous ces éléments sont reliés par les liaisons suivantes:
— le conduit d'aspiration 13 de la pompe 3 relie cette pompe au réservoir 2,
— le conduit de refoulement 14 de la pompe 3 relie cette pompe au distributeur 4, et constitue un conduit d'alimentation en fluide,
— un conduit d'échappement 15 relie le distributeur 4 au réservoir 2,
— un conduit de retour sans pression 16 relie également le distributeur 4 au réservoir 2,

— deux conduits 17 et 18 relient le distributeur 4 aux deux raccords principaux 19 et 20 du moteur 1 qui est un moteur réversible,

— le clapet de retenue 6 et le clapet de gavage 7 étant successivement disposés sur le conduit d'échappement 15 à partir du distributeur 4, un conduit de liaison 21 relie le conduit de refoulement 14 à la partie du conduit d'échappement 15 comprise entre ces clapets de retenue et de gavage, cependant que le clapet d'assistance 5 est disposé sur le conduit 21 de manière à permettre le passage du fluide du conduit de refoulement 14 vers le conduit d'échappement 15,

— un conduit de gavage 22 relie la partie du conduit d'échappement 15 comprise entre les clapets de retenue 6 et de gavage 7 au conduit de refoulement 14, cependant qu'un clapet de nonretour 23 est disposé sur ce conduit de gavage pour permettre le passage du fluide uniquement vers le conduit de refoulement 14,

— un conduit de dérivation 24 relie le distributeur à deux positions 9 au conduit de refoulement 14,

— un autre conduit 25 relie ce distributeur 9 au circuit d'utilisation 8.

Schématiquement, le manipulateur 10 comprend deux enroulements distincts 26 et 27 reliés par des câbles ou fils électriques 28, 29, à une borne des organes de réglage 11, 12, respectivement, l'autre borne desdits organes de réglage étant reliée (30, 31), à la masse 32. Un curseur 33, pivotant (34) est attelé à une manette 35 de commande manuelle et est susceptible d'être en contact avec l'un ou avec l'autre des deux enroulements 26, 27, ou encore, dans la position médiane de la manette 35, de n'être en contact avec aucun de ces deux enroulements (il s'agit de la disposition représentée sur la figure). Ce curseur est, en outre, raccordé à une source de courant électrique 36.

On indiquera encore des ordres de grandeurs des pressions de tarage des divers clapets:
— clapet d'assistance 5 : de 0 à 500 bars, selon l'excitation de l'organe de réglage 11,
— clapet de retenue 6 : de 0 à 500 bars, selon l'excitation de l'organe de réglage 12,
— clapet de gavage 7 : 10 bars.

Enfin, de manière connue, les distributeurs 4 et 9 sont munis de manettes de commande 4a, 9a, respectivement.

Les trois positions du distributeur 4 correspondent:
— la première position, aux mises en communication des conduits 14 et 17, et, des conduits 18 et 15, et, à l'obturation du conduit 16,
— la deuxième position, à la mise en communication des conduits 17, 18 et 16, et, à l'obturation des conduits 14 et 15, et,
— la troisième position, aux mises en communication des conduits 14 et 18, et, des conduits 17 et 15, et, à l'obturation du conduit 16.

Les deux positions du distributeur 9 correspondent:

— la première position, à l'obturation des conduits 24 et 25, et,

— la deuxième position, à la mise en communication de ces conduits 24 et 25.

Le fonctionnement du dispositif décrit va maintenant être exposé. Il comporte plusieurs phases remarquables qui correspondent à des combinaisons particulières des positions choisies des deux distributeurs.

*Fonctionnement en assistance:* les distributeurs 4 et 9 sont placés dans leurs premières positions respectives. Ainsi, le fluide refoulé par le pompe 3 et contenu dans les conduits 14 et 17 entraîne le moteur d'assistance 1 de la remorque dans un certain sens: celui du déplacement en evant de la remorque. La valeur du couple maximal du moteur 1 dépend de la valeur de la pression maximale dans le conduit 14. Or, cette pression maximale est égale à la pression de tarage du clapet 5. Cette pression varie de 0 à 500 bars, lorsque le curseur 33 du manipulateur 10 se déplace sur l'enroulement 26 depuis sa position neutre médiane. La valeur du couple d'assistance du moteur 1 varie donc de 0 à la valeur du couple maximal correspondant à la pression du fluide égale à 500 bars. L'assistance est donc réglable et peut également agir en marche arrière.

*Fonctionnement en retenue:* les distributeurs 4 et 9 sont placés dans leurs premières positions respectives. Le curseur 33 est placé sur l'enroulement 27 et permet de régler la pression de tarage du clapet de retenue 6 à une valeur choisie entre 0 et 500 bars. Naturellement, plus cette valeur est grande, davantage est grand l'effort que doit vaincre la pression du fluide qui s'échappe du moteur 1 par le conduit 18 pour s'écoulter dans le conduit 15 au-delà du clapet de retenue 6. Le moteur 1 fonctionne alors en frein. Il doit être noté que lorsque la pression de tarage d'un des clapets d'assistance 5 et de retenue 6 est non nulle, celle de l'autre clapet est nulle. En effet, le manipulateur 10 est réalisé de manière que le curseur 33 ne soit en contact simultanément qu'avec un seul des enroulements 26, 27, et ne commande donc l'excitation que d'un seul des organes de réglage 11, 12.

Cette disposition est judicieuse, car on concevrait mal de réaliser à la fois l'assistance et la retenue, qui sont antinomiques. Mais elle est en outre très intéressante en service, car, dans le cas d'une remorque tractée, le conducteur de l'engin peut avoir la nécessité de modifier sa commande presque instantanément de l'assistance à la retenue, et inversement, et il le peut en agissant sur la seule manette 35. Le fonctionnement en retenue est intéressant, car il permet d'éviter la mise en travers de la remorque par rapport à la direction du déplacement du tracteur lors de descentes importantes, désignées encore par "mise en portefeuille" de la remorque.

On peut remarquer qu'en "retenue", la pression dans le conduit 14 peut être trés faible, et pourrait parfois être trop faible pour éviter la cavitation du moteur 1. C'est pourquoi, il est judicieux d'alimenter l'admission de ce moteur avec un débit de gavage suffisant : le clapet de gavage 7 et le conduit 22 permettent cette alimentation d'appoint.

Enfin, on notera encore les deux points suivants, relatifs à la mise en place du distributeur 4 dans sa deuxième position:

— d'une part, le moteur 1 fonctionne en roue libre, ses admission 19 et échappement 20 étant en communication entre eux et avec le réservoir 2;

— d'autre part, le conduit 14 est obturé, rendant disponible pour une autre utilisation le débit refoulé par la pompe 3 : cette autre utilisation peut naturellement être constituée par le circuit d'utilisation 8, lorsque le distributeur 9 est placé dans sa deuxième position.

L'invention n'est pas limitée à la réalisation décrite, mais en couvre au contraire toutes les variantes qui pourraient lui être apportées, sans sortir de son cadre, ni de son esprit.

**Revendications**

1. Dispositif d'assistance motrice comprenant au moins:

— un moteur d'assistance à fluide (1),

— une source de fluide sous pression (3),

— un conduit d'alimentation (14—17) du moteur reliant le raccord de refoulement de la source de fluide au raccord d'admission (19) du moteur, et,

— un clapet de décharge taré (5), dit, clapet d'assistance, qui est raccordé en dérivation (21) au conduit d'alimentation (14) et qui est muni d'un dispositif de réglage (11) de son tarage, dont la commande (35) est volontaire, caractérisé en ce que, de manière connue en soi, il comprend un conduit d'échappement (18—15) du moteur, sur lequel est disposé un autre clapet de décharge taré (6), dit, clapet de retenue et en ce que ce clapet de retenue (6) est muni d'un dispositif de réglage (12) de son tarage, dont la commande (35) est également volontaire, les commandes (35) de réglage de tarage des deux dits clapets d'assistance et de retenue étant synchronisées au moyen d'un manipulateur unique (35) à deux plages (26 et 27) distinctes de fonctionnement séparées par une plage neutre, l'une des plages de fonctionnement correspondant à des pressions de tarage sensiblement nulles de l'un des clapets, non nulles de l'autre clapet, l'autre plage de fonctionnement correspondant à des pressions de tarage sensiblement nulles dudit autre clapet et non nulles du clapet complémentaire, et, la plaque neutre correspondant à une pression de tarage sensiblement nulle de chaque clapet.

2. Dispositif d'assistance motrice selon la revendication 1, caractérisé en ce qu'un distributeur de fluide (4) à au moins deux positions est interposé sur les conduits d'alimentation (14—17) et d'échappement (18—15), assurant, dans une première position, la continuité de chacun de ces deux conduits, et, dans une deuxième position, mettant les parties (17 et 18) de ces deux conduits comprises entre lui-même (4) et le moteur (1) en communication entre elles et avec un réservoir de fluide sans pression (2).

3. Dispositif d'assistance motrice selon la revendication 2, caractérisé en ce que le distributeur de fluide (4) à au moins deux positions obture, dans ladite deuxième position, le conduit d'alimentation (14), cependant qu'un conduit de dérivation (24—25) relie la partie (14) de ce conduit d'alimentation comprise entre la source de fluide (3) et le distributeur (4) à un circuit d'utilisation (8).

4. Dispositif d'assistance motrice selon l'une quelconque des revendications 1 à 3, caractérisé en ce que sur le conduit d'échappement (18—15), en aval du clapet de retenue (6) par rapport au moteur (1), est disposé un troisième clapet de décharge (7), taré à une faible pression, dit clapet de gavage, cependant qu'un conduit de gavage (22) relie les conduits d'alimentation (14) et d'échappement (15) en étant raccordé à ce dernier entre le clapet de retenue (6) et la clapet de gavage (7) et qu'un clapet de non-retour (23) est disposé sur ce conduit de gavage (22) et permet le passage du fluide uniquement du conduit d'échappement (15) vers le conduit d'alimentation (14).

**Patentansprüche**

1. Hilfsantriebsvorrichtung mit zumindest einem Flüssigkeitshilfsmotor (1), einer Druckflüssigkeitsquelle (3), einer Motorspeiseleitung (14—17), die den Druckanschluß der Flüssigkeitsquelle mit der Motorzufuhrleitung (19) verbindet, und einem geeichten Ausflußventil (5), genannt Hilfsventil, welches über die Zweigleitung (21) mit der Speiseleitung (14) verbunden und mit einem Regler (11) zur Eichung versehen ist, dessen Steuerung (35) wählbar ist, dadurch gekennzeichnet, daß sie auf an sich bekannte Weise eine Ausflußleitung (18—15) des Motors umfaßt, an der ein weiteres geeichtes Ausflußventil (6), genannt Rückhalteventil, angeordnet ist, welches mit einem Regler (12) zur Eichung versehen ist, dessen Steuerung (35) ebenfalls wählbar ist, und daß die Steuerungen (35) der Eichregler des Hilfs- und des Rückhalteventils durch ein Eintastengerät (35) mit zwei unterschiedlichen, durch einen neutralen Bereich getrennten Wirkungsbereichen (26 und 27) synchronisiert werden, wobei einer der Wirkungsbereiche einem Eichdruck von im wesentlichen Null für das eine Ventil und Nichtnull für das andere Ventil entspricht, der andere Wirkungsbereich einem Eichdruck von Nichtnull für das eine Ventil und von im wesentlichen Null für das andere Ventil entspricht und der neutrale Bereich einem Eichdruck von im wesentlichen Null für jedes Ventil entspricht.

2. Hilfsantriebsvorrichtung nach Anspruch 1, dadurch gekennzeichnet, daß ein Flüssigkeitsverteiler (4) mit zumindest zwei Stellungen in den Speiseleitungen (14—17) und Ausflußleitungen (18—15) zwischengeschaltet ist, welcher in einer ersten Stellung die Kontinuität jeder dieser beiden Leitungen gewährleistet und in einer zweiten Stellung die Abschnitte (17 und 18) der beiden Leitungen, die sich zwischen dem Flüssigkeitsverteiler (4) und dem Motor (1) befinden, miteinander und mit einem Behälter für eine nicht unter Druck stehende Flüssigkeit (2) verbindet.

3. Hilfsantriebsvorrichtung nach Anspruch 2, dadurch gekennzeichnet, daß der Flüssigkeitsverteiler (4) mit zumindest zwei Stellungen in der zweiten Stellung die Speiseleitung (14) absperrt, während eine Zweigleitung (24, 25) den Abschnitt (14) der Speiseleitung, der sich zwischen der Flüssigkeitsquelle (3) und dem Verteiler (4) befindet, mit einem Ausgangskreis (8) verbindet.

4. Hilfsantriebsvorrichtung nach einem der Ansprüche 1 bis 3, dadurch gekennzeichnet, daß in der Ausflußleitung (18—15), vom Motor (1) aus gesehen stromabwärts vom Rückhalteventil (6), ein drittes, mit einem leichten Druck geeichtes Ausflußventil (7), genannt Aufladungsventil, vorgesehen ist, wobei eine Aufladungsleitung (22) die Speiseleitung (14) und die Ausflußleitung (15) verbindet, indem es an letztere zwischen dem Rückhalteventil (6) und dem Aufladungsventil (7) angeschlossen ist, und daß ein Rückschlagventil (23) in der Aufladungsleitung (22) vorgesehen ist, welches den Durchfluß der Flüssigkeit nur von der Ausflußleitung (15) zur Speiseleitung (14) gestattet.

**Claims**

1. A drive-assisting device comprising at least:
— a fluid relief engine, (1)
— a source of pressurized fluid, (3)
— an engine supply pipe (14—17) connecting the delivery connector of the fluid source to the engine inlet pipe (19), and,
— a calibrated discharge valve (5), so-called relief valve which is shunt connected (21) to the supply pipe (14) and which is provided with means (11) for adjusting its calibration, the control (35) of which is deliberate, characterized in that said device comprises, in known manner, a release pipe (18—15) from the engine, on which is positioned another calibrated discharge valve (6), so-called check valve, and in that said calibrated discharge valve (12) is provided with means for adjusting its calibration, the control (35) of which is also deliberate, the calibration-adjusting controls (35) of both the relief and check valves being synchronized by means of one manipulator (35) with two separate operating ranges (26—27) separated by a neutral range, one of the operating ranges corresponding to substantially nil pressures for one of the valves, and to non-nil pressures for the other valve, the other operating range corresponding to substantially nil calibration pressures for the said other valve and to non-nil pressures for the complementary valve, and, the neutral range corresponding to a substantially nil calibration pressure for each valve.

2. A drive-assisting device according to claim 1, characterized in that a fluid distributor (4), with at least two positions, is interposed on the supply (14—17) and exhaust (18—15) pipes to ensure, in a first position, the continuity of each of the said pipes, and, in a second position the communication between the parts (17—18) of said two pipes situated between the said distributor (4) and the motor (1), and their communication with a non-pressurized fluid reservoir (2).

3. A drive-assisting device according to claim 2, characterized in that a fluid distributor (4) with at least two positions blocks, in the said second position, the supply pipe (14), whereas a by-pass (24—25) connects the part (14) of the supply pipe situated between the fluid source (3) and the distributor (4) to a working circuit (8).

4. A drive assisting device according to anyone of claims 1 to 3, characterized in that on the release pipe (18—15) and downstream of the check valve (6) with respect to the motor (1), is placed a third discharge valve (7), calibrated at a low pressure, and so-called complementary valve (22), whereas a complementary pipe (22) connects the supply (14) and exhaust (15) pipes by being connected to the latter between the check valve (6) and the complementary valve (7) and a non-return valve (23) is arranged on the said complementary pipe (22) and allows the fluid to flow only from the release pipe (15) towards the supply pipe (14).

0015169